Europäisches Patentamt

European Patent Office

Office européen des brevets

(19)

(11) Publication number: **0 122 811**

**A2**

# (12) EUROPEAN PATENT APPLICATION

(21) Application number: 84302620.4

(22) Date of filing: 17.04.84

(51) Int. Cl.³: **B 60 R 1/10**

(30) Priority: 19.04.83 GB 8310515

(43) Date of publication of application:
24.10.84 Bulletin 84/43

(84) Designated Contracting States:
DE FR GB IT SE

(71) Applicant: Parry, Sheenagh Mary
10 Sunbury Way
Hanworth Middlesex TW13 6XJ(GB)

(71) Applicant: Piggott, Bryan John
10 Sunbury Way
Hanworth Middlesex TW13 6XJ(GB)

(72) Inventor: Parry, Sheenagh Mary
10 Sunbury Way
Hanworth Middlesex TW13 6XJ(GB)

(72) Inventor: Piggott, Bryan John
10 Sunbury Way
Hanworth Middlesex TW13 6XJ(GB)

(74) Representative: Ackroyd, Robert et al,
POLLAK MERCER & TENCH High Holborn House 52-54
High Holborn
London WC1V 6RY(GB)

(54) Vehicle mirrors.

(57) The vehicle mirrors 6 include a part 10 for mounting on a motor, or other, vehicle and a part 14 carrying a pair of mirrors 2, 4 and movable relatively to the mounting part. The assembly is mounted (Figure 6) on a forward part of the vehicle in a position in which it is retracted from the driver's view in one relative position of the two parts. In this retracted position the mirrors 2, 4 lie flat adjacent the front of the vehicle. In the other, working position the mirrors can be seen by the driver and are positioned to afford him or her a view to each side of the forward part of the vehicle. This view is of assistance to the driver when the vehicle is to emerge from a minor road or waterway. The mirrors are raised to their working position by a remote control cable leading to a point adjacent the driver's seat. In other embodiments, the mirrors are retractable beneath an opening flap on the vehicle (Figure 7) and are permanently mounted on the vehicle's forward part (Figure 8).

FIG.1.

Croydon Printing Company Ltd

VEHICLE MIRRORS

DESCRIPTION

This invention relates to mirrors for vehicles, for example road vehicles.

When a road vehicle is about to turn from a minor road into a major road, its driver, because of the shape and position of adjacent walls, buildings, etc., often does not have a clear view of the major road until the vehicle has emerged some distance from the minor road. The problem is often exacerbated by other vehicles parked very close to the junction of the two roads. This lack of a clear view also occurs when negotiating other road hazards and often leads to accidents. A similarly dangerous situation can also exist when a marine vehicle is emerging from a minor waterway, or otherwise negotiating a hazard.

The present invention seeks to overcome these problems and so lessen the incidence of accidents.

The invention provides a vehicle having at least one mirror mounted on the vehicle in a position or movable into a position in which it affords a driver of the vehicle a view from the vehicle of a region displaced forwardly and laterally from the driving position of the vehicle.

Preferably, the vehicle has two such mirrors positioned to afford the driver a view of two such regions lying on opposite sides of the vehicle. The mirrors are, for example, inclined oppositely at about 45° to the driver's line of sight.

Advantageously, the or each mirror is retractably mounted on the vehicle and can be moved into and retracted from its working position by means operable from the driving position.

The mirror or mirrors are conveniently fitted to an existing vehicle, for example a motor vehicle, and the invention also provides a mirror assembly comprising a mounting member for attachment to a forward part of a vehicle, a mirror member comprising at least one mirror, and means operable to cause movement of the mirror member relative to the mounting member between first and second relative positions of the members. Resilient biassing means may be included to urge the members into one of their relative positions.

In use of this assembly with a motor vehicle, the mounting member will usually be attached to the vehicle so that, in the first relative position of the members the mirror is positioned below the bonnet line of the vehicle and therefore out of sight of the driver, and, upon operation of the device, the mirror member is raised above the bonnet line so that the mirror is raised to a position in which the driver is afforded a view to at least one side of the forward part of the vehicle.

Conveniently the mounting and mirror members form parallel sides of a parallelogram linkage and, in use, the mirror member moves from the first to second position in a forwardly- and upwardly-extending arc. One of the mounting and mirror members may be a channel-shaped member in which the other member is at least partly received in the first and second positions.

The device advantageously includes means for its remote operation from the driving position of the vehicle, for example by a remote control cable.

Preferably, the mirror assembly of the invention includes means for pivoting the or each mirror relative to the mirror member during relative movement of the mounting and mirror members. In use of such an assembly, the or each mirror can lie flat adjacent the front of the vehicle in the first position and pivot about a vertical axis during relative movement of the first and second members into a position in which it is transverse to the vehicle driver's line of sight. In the case where the assembly includes two mirrors, these will preferably lie in a common plane in the first position and in mutually-perpendicular planes in the second position.

When the mirror member comprises a channel-shaped member, the mirrors may be pivotally mounted on opposed side walls of the channel-shaped member and have operating portions extending into the interior of the channel member, the operating portions being contacted by a control member which moves to pivot the mirrors into their inclined planes during movement of the mirror member and the mounting member to their second relative position.

The control member is conveniently a tension spring biassing the mirror member and the mounting member into their first relative position.

Advantageously, the operating portions are contacted by the mounting member to pivot the mirrors into their common plane upon movement of the mirror member and the mounting member to their second relative position.

Throughout this specification, the word "mirror" is used to include all types of relective elements and not only those produced by reflective coating of a sheet of glass.

Embodiments of the invention will now be described by way of example with reference to the drawings, in which:-

Figure 1 is a front elevation of a mirror assembly for attachment to a motor vehicle,

Figure 2 is a plan view of the assembly of Figure 1 in a retracted conditions,

Figure 3 is a plan view of the assembly of Figure 1 in its operating condition,

Figure 4 is a sectional side view of the assembly of Figure 1 in its retracted condition,

Figure 5 is a sectional side view of the assembly of Figure 1 in its operating condition,

Figure 6 is a side view of part of a motor vehicle having the mirror assembly of Figures 1 to 5 attached,

Figure 7 is a perspective view of a forward part of a motor vehicle having a different mirror assembly embodying the invention, and

Figure 8 is a view similar to Figure 7 of a vehicle having another mirror assembly embodying the invention.

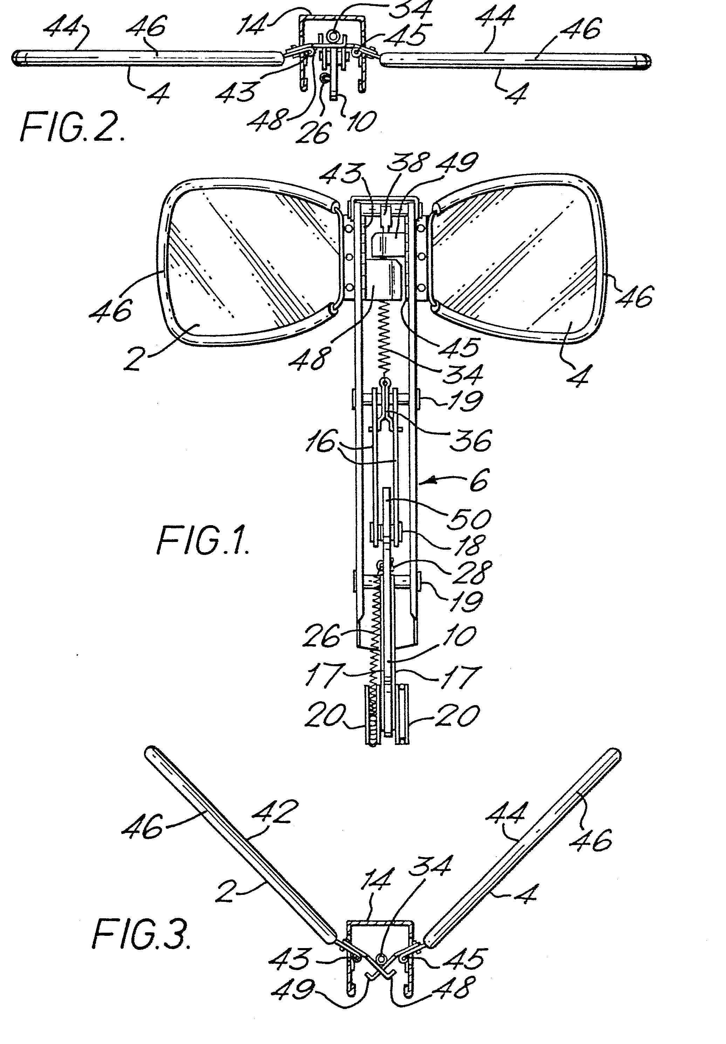

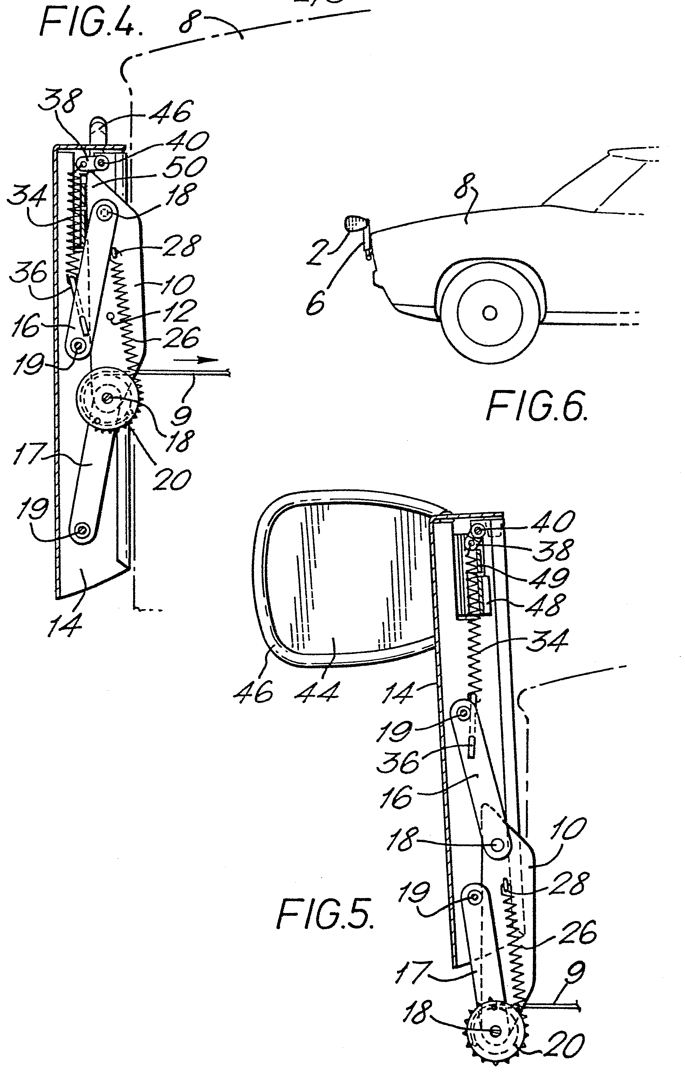

The mirror assembly shown in drawings has two mirrors 2,4 which are mounted on a support structure 6 which can be attached to the front of motor vehicle 8 (Figure 6). The support structure is operated by a remote control cable 9 (for example a Bowden cable) from the driving position of the vehicle and is thus raised from a retracted position shown in Figure 4 to an operating position shown in Figures 1 and 5. In the retracted position, the mirrors 2,4 lie flat adjacent the front of the vehicle 8 whilst in the operating position they are turned through about 45° about a vertical axis to afford the driver of the vehicle a view to each side.

The support structure 6 of the mirror assembly has a first member in the form of a plate 10 which has a tapped aperture 12 for attachment of the plate 10 to the motor vehicle 8. The plate 10 is connected to a channel-section member 14 by upper 16 and lower 17 pairs of links, pivotally attached at their ends to the plate 10 and the channel-section member 14 by pivot pins 18,19 extending through the plate 10 and across the channel section 14 respectively. The plate 10, the portion of the channel section member 14 between the pins 19, and the links 16, 17 form a parallelogram linkage which allows the channel-section member 14 to move relative to the plate 10 along an arcuate path between the retracted and the operating positions of the assembly.

Each link of the lower pair of links 17 has attached at its end adjacent the plate 10 a pulley 20 which is secured against rotation relative to its respective link 17 by a pin (not shown) extending from the link 17 into an aperture (not shown) in the pulley 20. A first helical tension spring 26 extends from a first anchorage 28 on the plate 10 to a second anchorage adjacent the periphery of one of the pulleys 20. An end portion of the spring 26 adjacent the second anchorage lies within the groove of the pulley 20. The spring 26 biases the parallelogram linkage into condition shown in Figure 4.

The remote control cable 9 (Figure 4) is attached to and extends in part of the groove of the other pulley 20. The cable 9 leads to an operating handle positioned to be reached conveniently from the driving position of the motor vehicle. In a modification of this embodiment, end portions of the spring 26 and cable 9 are replaced by short lengths of chain which pass around the pulleys 20. A second helical tension spring 34 extends from a two legged-anchorage pin 36 secured to the upper links 16 to an eccentric mounting bracket 38 rotatable on a rod 40 extending across the channel-section member 14 adjacent its upper end.

The mirrors 2, 4 are supported on respective backing plates 42, 44, which are mounted on hinges 43, 45 attached to the inner faces of the side walls of an upwardly-extending extension portion of the channel-section member 14 adjacent the upper end of the channel-section member 14. The edges of the mirrors 2, 4 and backing plates 42, 44 are protected by rubber strips 46. The mirror backing plates 42, 44 extend through slots in the side walls of the channel-section member 14 and are formed with operating portions in the form of tabs 48, 49 of which, in the retracted position of the device, the front faces are abutted by an upper end portion 50 of the plate 10. This abutment causes the mirrors 2, 4 and backing plates 42, 44 to pivot on the hinges 43,45 into the position shown in Figure 2 when the mirror assembly is retracted. Upon movement of the parallelogram linkage 10, 14, 16, 17 from the retracted to the operating position of the device, the eccentric bracket 38 rotates on the rod 40 so that the second spring 34 bears against the rear surfaces of the tabs 48,49 to cause the backing plates 42, 44 and mirrors 2, 4 to pivot on the hinges 43, 45 in the opposite direction.

In use, the mirror device is attached by use of the tapped aperture 12 to the front of the motor vehicle 8, as shown in Figure 6, and the control cable 9 extended to the operating handle which is in a convenient position adjacent the driver's seat of the vehicle. In its normal, retracted position, the device is in the condition shown in Figures 2 and 4 of the drawings. When the control cable 9 is pulled, the lower linkages 17 pivot upon the pins 18 relatively to the plate 10 in a clockwise direction (as seen in Figure 4) and the channel-section member 14 is raised to the operating position shown in Figures 1, 5 and 6 of the drawings. During this movement of the parallelogram linkage 10, 14, 16, 17 the second spring 34 bears against the rear of the tabs 48, 49 to cause the mirror backing plates 42, 44 to pivot on their hinges 43, 45 through approximately 45° into the position shown in Figures 3 and 5. Upon release of the control cable 32 the parallelogram linkage reverts under the influence of the spring 26 and the action of the gravity on the channel-section member 14 to the retracted condition. During or at the end of the movement to the retracted condition, the upper end 50 of the plate member 10 engages the tabs 48, 49 and ensures that the mirrors are returned to and maintained in the condition shown in Figures 2 and 4 of the drawings.

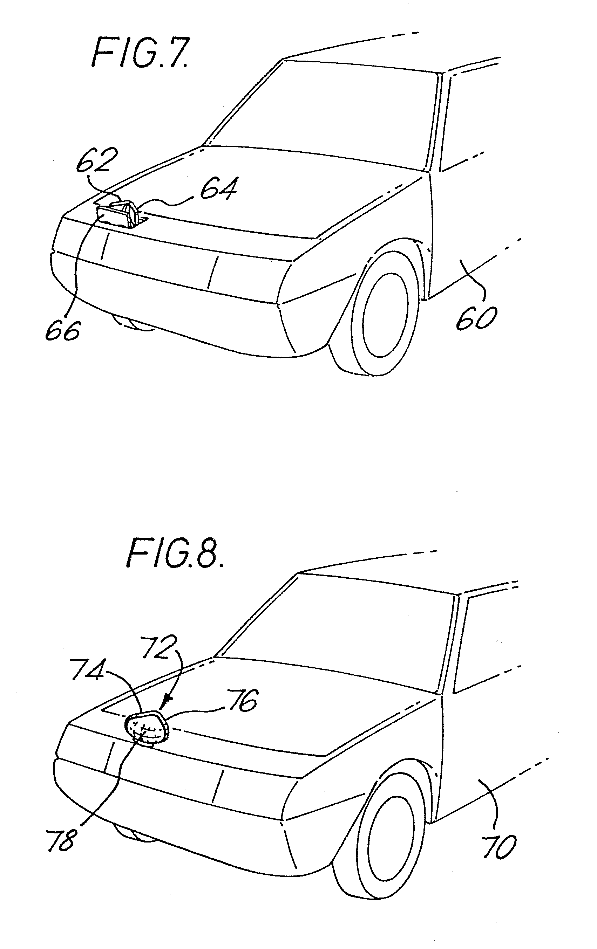

Figure 7 of the drawings shows a motor car 60 on which a pair of mirrors 62, 64 are retractably mounted. The mirrors 62, 64 are retractable into a compartment in a forward part of the vehicle, which is closed by a pivoting flap 66. Opening and closing of the flap 66 is controlled by the operating means raising and retracting the mirrors 62, 64. This means may be a cable as described above, or may be, for example, pneumatic, hydraulic or electrical. The mirrors 62, 64 may be arranged to pivot during movement to and from their working position so that they lie perpendicularly to the longitudinal axis of the motor car in this retracted condition. In all cases, the mirrors 62, 64, in their working condition, are positioned in front of the driving position in the vehicle to afford the driver a view to each side of the forward part of the motor car 60.

Figure 8 of the drawings shows a motor car 70 having a mirror assembly 72 mounted in front of the driving position. The mirror assembly 72 comprises two angled mirrors 74, 76 and a housing 78. The mirrors 74, 76 are angled to provide the desirable views to each side of the car 70 but are not retractable from this position.

It will be evident that many modifications of the embodiments described here can be made within the scope of the invention. For example, the assembly described with reference to Figures 1 to 6 can be incorporated into a vehicle as original equipment and, if desired, may be combined with a pivotable flap as shown in Figure 7. 7. The pivotable flap may also be replaced by a sliding flap. The mirrors may be flat or convex and may of course be positioned either for left-hand or righthand drive vehicles. Electrical, pneumatic, hydraulic, mechanical or other means may be used for raising and lowering the mirrors and for opening and closing any flap or door protecting the mirrors when retracted. The means for rotating the mirrors may be independent of the means for raising them. Although described with reference to road vehicles, the invention is equally applicable to marine craft.

Claims:

1.    A mirror assembly for mounting on a vehicle, characterised in that it comprises a mounting member (10) having means (12) for its attachment to a forward part of a vehicle (8), a mirror member (14) comprising at least one mirror (2, 4; 62, 64; 74, 76), and operating means (9, 20) operable to cause movement of the mirror member (14) relative to the mounting member (10) between first and second relative positions of the members.

2.    A mirror assembly according to claim 1, characterised in that at least a portion of the mirror member (14) and at least a portion of said mounting member (10) form opposite sides of a parallelogram linkage (10, 14, 16, 17).

3.    A mirror assembly according to claim 1 or claim 2, characterised in that one (14) of the mirror member and the mounting member comprises a channel-shaped member in which the other (10) of the members is at least partially received in the first and second positions.

4.    A mirror assembly according to any preceding claim, characterised by resilient means (26, 34) biassing the mirror member (14) and the mounting member (10) into one of their relative positions.

5.    A mirror assembly according to any preceding claim, characterised in that the operating means (9, 20) are arranged for operation remote from said mirror assembly.

6.    A mirror assembly according to any preceding claim, characterised in that the or each mirror (2, 4; 62, 64) is pivotally mounted on the mirror member (14) and is arranged to pivot relative to the mirror member upon movement of the mirror member and the mounting member (10) between their first and second relative positions.

7. A mirror assembly according to claim 6, characterised in that two mirrors (2, 4; 62, 64) are pivotally mounted on the mirror member (14), the mirrors extending in a common plane in the first relative position of the mirror member and the mounting member (10) and being arranged to pivot in opposite directions, upon movement of the mirror member and the mounting member to their second relative position, into a position in which the mirrors (2, 4) extend in mutually-inclined planes with their reflective surfaces (2, 4) facing away from each other.

8. A mirror assembly according to claim 7, characterised in that the mirror member (14) comprises a channel-shaped member and the mirrors (2, 4; 62, 64) are pivotally mounted on opposed side walls of the channel-shaped member and have operating portions (48, 49) extending into the interior of the channel member, the operating portions being contacted by a control member (34) which moves to pivot the mirrors into their inclined planes during movement of the mirror member and the mounting member (10) to their second relative position.

9. A mirror assembly according to claim 8, characterised in that the control member is a tension spring (34) biassing the mirror member (12) and the mounting member (10) into their first relative position.

10. A mirror assembly according to claim 8 or claim 9, characterised in that the operating portions (48, 49) are contacted by the mounting member (10) to pivot the mirrors into their common plane upon movement of the mirror member (14) and the mounting member (10) to their second relative position.

11. A vehicle (8; 60) characterised by having a mirror assembly (2, 4, 6; 62, 64) according to any preceding claim attached to its forward part and positioned such that, when the mounting member (10) and the mirror member (14) are in their second relative position, a driver of the vehicle occupying the driving position of the view is afforded a view from the vehicle of a region displaced forwardly and laterally from the driving position.

12. A vehicle (8; 60; 70) characterised by having at least one mirror (2, 4; 64; 74, 76) mounted on the vehicle in a position or movable into a position in which it affords a driver of the vehicle a view from the vehicle of a region displaced forwardly and laterally from the driving position of the vehicle.

13. A vehicle (9; 60; 70) according to claim 12, characterised by having two mirrors (2, 4; 62, 64; 74,76) positioned to afford the driver a view of two said regions lying on opposite sides of the vehicle.

14. A vehicle according to claim 11 or claim 12, characterised in that the or each mirror (2, 4; 62; 64) is retractably-mounted on the vehicle (8; 60) and movable between a working position in which it affords the driver the said view and a position in which it is retracted from the driver's view, the vehicle (8; 60) including means (9, 20) operable from said driving position for controlling the movement of the mirrors(s).

15. A vehicle according to claim 14, characterised in that the or each mirror (2, 4; 62, 64) is arranged to rotate about a substantially vertical axis during its movement between its working position and its retracted position, the or each mirror extending in a substantially vertical plane lying substantially perpendicular to the longitudinal axis of the vehicle in its retracted position and being rotated upon movement to its working position into a position in which it affords the driver the said view from the vehicle.

FIG.2.

FIG.1.

FIG.3.

0122811

FIG.4.

FIG.6.

FIG.5.

FIG.7.

62

64

66

60

FIG.8.

72

74

76

78

70